# EUROPEAN PATENT APPLICATION

(11) **EP 4 398 172 A1**
(43) Date of publication of application: **10.07.2024**
(21) Application number: 22863966.2
(22) Date of filing: 02.06.2022
(51) Int. Cl.: G06Q 20/00, G06Q 30/06, G06Q 50/10

(54) **INFORMATION PROCESSING DEVICE, PROGRAM, AND INFORMATION PROCESSING METHOD**

(30) Priority: 31.08.2021 JP 2021141741
(71) Applicant: Idemitsu Kosan Co.,Ltd., Tokyo 100-8321 (JP)
(72) Inventor: KOBAYASHI, Soichi, Tokyo 100-8321 (JP); OISHI, Akira, Tokyo 100-8321 (JP); FUKUCHI, Taketora, Tokyo 100-8321 (JP); ABE, Yasushi, Tokyo 100-8321 (JP); AOYAGI, Yasushi, Tokyo 100-8321 (JP); ASAHI, Hiromitsu, Tokyo 100-8321 (JP); ICHIKAWA, Takehiro, Tokyo 100-8321 (JP); TAJIMA, Nobuhiro, Tokyo 174-0043 (JP); ASAI, Akihiko, Tokyo 165-0023 (JP)
(74) Representative: Hoffmann Eitle
(86) International application number: PCT/JP2022/022469
(87) International publication number: WO 2023/032378

(57) **Abstract**

Provided is a highly convenient vehicle lending service. Included are first reception means (111) for receiving registration of a subscription member, second reception means (112) for receiving registration of a car share member, storage means (120) for storing registration information that sets a user as the subscription member based on the reception performed by the first reception means (111) and storing registration information that sets the user as the car share member based on the reception performed by the second reception means (112), and payment means (170) for executing payment processing for a usage fee for subscription and executing payment processing for a usage fee for car share. The storage means (120) is allowed to store, based on the reception performed by the first reception means (111), registration information that sets the user as the car share member while setting the user as the subscription member. The payment means (170) is allowed to execute lump-sum payment processing for collectively paying the usage fee for the subscription and the usage fee for the car share.

## Description

### Technical Field

The present invention relates to an information processing device, a program, and an information processing method for providing a service for lending out a vehicle to a user.

### Background Art

As vehicle lending services for lending out a vehicle, there are known lease, subscription (hereinafter referred to as "SS"), rental, and car sharing (hereinafter also referred to as "car share" or "CS").

For the sake of convenience of description, a vehicle to be lent out in the lease is referred to as "lease vehicle," a vehicle to be lent out in the subscription is referred to as "subscription vehicle" or "SS vehicle," a vehicle to be lent out in the rental is referred to as "rental car," and a vehicle to be lent out in the car sharing is referred to as "share car" or "CS vehicle."

Each of the vehicle lending services has its own feature.

For example, depending on a difference in contract period, the "lease" and the "subscription" are provided for use over a medium-to-long term, the "rental" is provided for use over a short period of time, and the "car share" is provided for use over an ultra-short period of time.

Of those, in regard to the lease, there have been disclosed systems that enable shared use of a vehicle (see, for example, Patent Literatures 1 and 2).

According to such systems, it is possible to improve an operating rate per vehicle, thereby allowing one vehicle to be efficiently used.

### Citation List

### Patent Literature

[PTL 1] JP 2018-077733 A
[PTL 2] JP 2018-110029 A

### Summary of Invention

### Technical Problem

However, as vehicle lending services, a plurality of types thereof are provided independently of each other, and hence the following problems have arisen.

For example, in a case of a corporate member that contracts for lease or subscription, an employee thereof can freely use a lease vehicle or a subscription vehicle within a contract period. However, at a time of going on a business trip to a distant place, it has not been possible to use a rental car or a share car without separately contracting for rental or car share to become a member therefor in a business trip destination, thereby causing inconvenience.

In addition, in most cases, after use of a rental car or a share car, it has been required to pay a usage fee corresponding to a usage time period (usage-based pricing), and it has also been required separately therefrom to bear a membership fee (monthly flat rate) for a lease membership or a subscription membership, thereby leading to a problem of an increase in cost.

Further, the vehicle lending services are different from each other in contract, membership, rate structure, and the like, and hence it has been burdensome to be required to individually pay the usage fees.

### Solution to Problem

In view of the above-mentioned problem, according to one aspect of the present invention, there is provided an information processing device for executing information processing in a vehicle lending service for lending out a vehicle to a user, the information processing device including: first reception means for receiving registration of a first member being a member of a first vehicle lending service for which a usage period of the vehicle for the user is a first period; second reception means for receiving registration of a second member being a member of a second vehicle lending service for which the usage period of the vehicle for the user is a second period shorter than the first period; storage means for storing registration information that sets the user as the first member based on the reception performed by the first reception means and storing registration information that sets the user as the second member based on the reception performed by the second reception means; and payment means for executing payment processing for a usage fee for a first vehicle in the first vehicle lending service and executing payment processing for a usage fee for a second vehicle in the second vehicle lending service, wherein the storage means is allowed to store, based on the reception performed by the first reception means, registration information that sets the user as the second member while setting the user as the first member, and wherein the payment means is allowed to execute lump-sum payment processing for collectively paying the usage fee for the first vehicle and the usage fee for the second vehicle.

Further, according to another aspect of the present invention, there is provided a program for causing a computer of an information processing device for executing information processing in a vehicle lending service for lending out a vehicle to a user to function as: first reception means for receiving registration of a first member being a member of a first vehicle lending service for which a usage period of the vehicle for the user is a first period; second reception means for receiving registration of a second member being a member of a second vehicle lending service for which the usage period of the vehicle for the user is a second period shorter than the first period; storage means for storing registration information that sets the user as the first member based on the reception performed by the first reception means and storing registration information that sets the user as the second member based on the reception performed by the second reception means; and payment means for executing payment processing for a usage fee for a first vehicle in the first vehicle lending service and executing payment processing for a usage fee for a second vehicle in the second vehicle lending service, wherein the storage means is allowed to store, based on the reception performed by the first reception means, registration information that sets the user as the second member while setting the user as the first member, and wherein the payment means is allowed to execute lump-sum payment processing for collectively paying the usage fee for the first vehicle and the usage fee for the second vehicle.

Further, according to still another aspect of the present invention, there is provided an information processing method for executing information processing in a vehicle lending service for lending out a vehicle to a user, the information processing method including the steps of: receiving registration of a first member being a member of a first vehicle lending service for which a usage period of the vehicle for the user is a first period; receiving registration of a second member being a member of a second vehicle lending service for which the usage period of the vehicle for the user is a second period shorterthan the first period; storing registration information that sets the user as the first member based on the step of receiving the registration of the first member and storing registration information that sets the user as the second member based on the step of receiving the registration of the second member; and executing payment processing for a usage fee for a first vehicle in the first vehicle lending service and executing payment processing for a usage fee for a second vehicle in the second vehicle lending service, wherein the step of storing includes being allowed to store, based on the step of receiving the registration of the first member, registration information that sets the user as the second member while setting the user as the first member, and wherein the step of executing the payment processing includes being allowed to execute lump-sum payment processing for collectively paying the usage fee for the first vehicle and the usage fee for the second vehicle.

### Advantageous Effects of Invention

According to the present invention, for a lease member or a subscription member, it is possible to use a rental car or a share car reasonably by becoming a rental member or a car share member without bearing a membership fee therefor. According to the present invention, it is possible to further provide convenience through lump-sum payment of usage fees involved in lending of a plurality of types.

### Brief Description of Drawings

FIG. 1 is a schematic diagram of an information processing system according to one embodiment of the present invention.
FIG. 2 is a hardware configuration diagram of a server.
FIG. 3 is a hardware configuration diagram of a user terminal.
FIG. 4 is a functional configuration diagram of the information processing system.
FIG. 5 is a table for showing an example of a membership database.
FIG. 6 is a table for showing an example of a vehicle database of share cars.
FIG. 7 is a view for illustrating an example of a membership application screen.
FIG. 8 is a view for illustrating an example of a destination input screen.
FIG. 9 is a view for illustrating an example of a recommendation route screen.
FIG. 10 is a view for illustrating an example of a share car reservation screen.
FIG. 11 is a view for illustrating an example of a recommendation route detail screen.
FIG. 12 is a view for illustrating an example of a recommendation acceptance verification screen.
FIG. 13 is a view for illustrating an example of a reservation confirmation screen.
FIG. 14 is a view for illustrating an example of a lump-sum payment notification screen.
FIG. 15 is a table for showing an example of a granted loyalty point table.
FIG. 16 is a table for showing an example of a required loyalty point table.
FIG. 17 is a flowchart for illustrating a procedure for processing after login and the like.
FIG. 18 is a flowchart for illustrating a procedure for car share payment processing.

### Description of Embodiments

An information processing system 1 according to one embodiment of the present invention is described.

The information processing system 1 is a system that executes various kinds of information processing in a vehicle lending service in which a business operator lends out a vehicle to a member (user).

Types of lending of a vehicle 500 include "lease," "subscription," "car share," and "rental."

Those types of lending differ from each other in a contract period (usage period), a payment scheme (payment method), a rate structure, and the like.

The "lease" has a medium-to-long-term contract period of from six months to ten years, and employs, as a payment scheme, a (flat-rate) scheme in which a member pays a fixed amount of money (membership fee) annually or monthly.

The "subscription" has a medium-to-long-term contract period substantially the same as that of the lease, and employs, as a payment scheme, a (flat-rate) scheme in which a member pays a fixed amount of money (for example, membership fee of 30,000 yen per month) monthly.

The "rental" enables a short-term contract in units of hours, and employs, as a payment scheme, a (usage-based) scheme for paying an amount of money corresponding to a usage time period after return of the vehicle 500.

The "rental" also requires bearing of a monthly-flat-rate membership fee separately from the usage-based amount of money.

The "car share" enables an ultra-short-term contract in units of, for example, 15 minutes, and employs, as a payment scheme, a (usage-based) scheme for paying an amount of money corresponding to a usage time period after return of the vehicle 500. The "car share" requires bearing of a monthly-flat-rate membership fee (for example, 2,000 yen) separately from the usage-based amount of money.

For the sake of convenience of description, it is assumed that the information processing system 1 according to this embodiment can provide two types of lending, namely, the subscription and the car share.

In this embodiment, a share car is subjected to management (including storage and parking) in a parking lot near a boarding and alighting facility (station, bus stop, airport, or port) in which people can get on and out of a public transportation facility (railway, bus, airplane, or ship). The member can use a reserved share car by visiting a management location of the share car.

A subscription vehicle is managed at a home of the member during the contract period, and during that period, the member can freely use the subscription vehicle.

Without being limited thereto, the share car may be managed by a facility (for example, service station (SS)) of the business operator, and the subscription vehicle may be managed at a place otherthan the home of the member.

The operator also provides optional services such as lending of a child safety seat and addition of a non-operation charge (NOC).

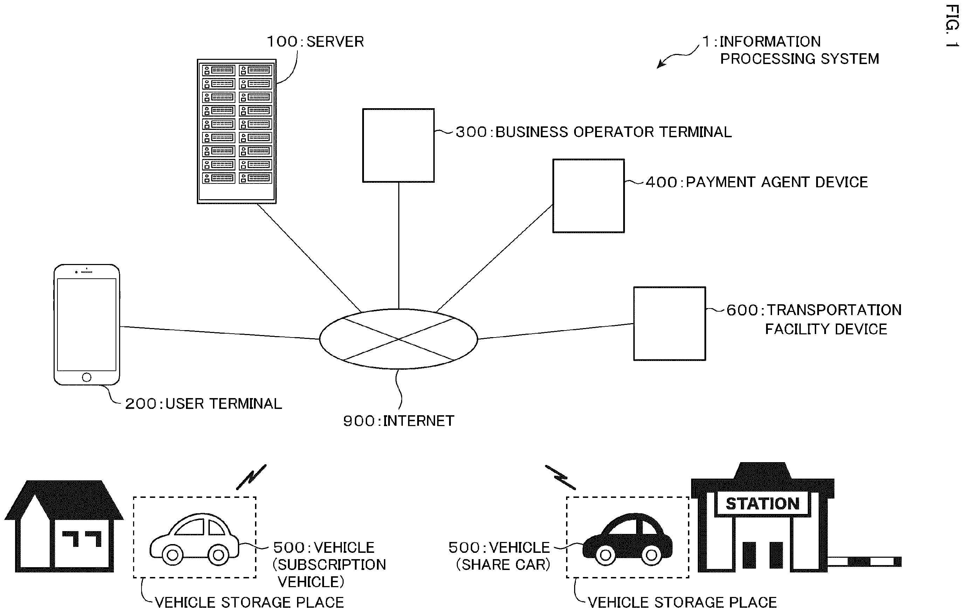

FIG. 1 is a schematic diagram of the information processing system 1 according to the present invention.

The information processing system 1 includes a server 100, a user terminal 200, a business operator terminal 300, a payment agent device 400, a transportation facility device 600, and the vehicles 500 (a subscription vehicle and a share car), which are connected so as to enable communication therebetween through Internet 900.

The server 100 is an information processing device that is operated and managed by a management business operator.

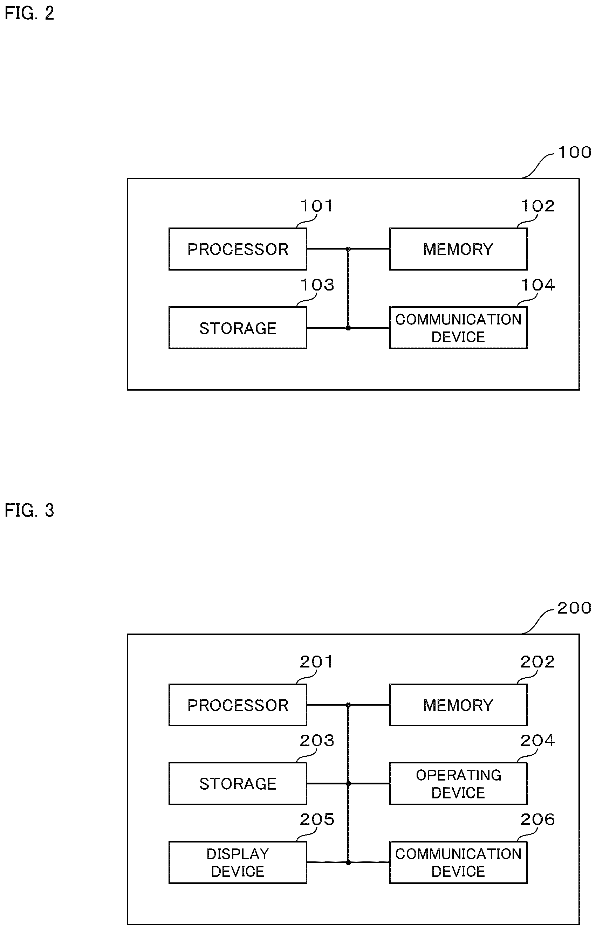

FIG. 2 is a hardware configuration diagram of the server 100.

The server 100 includes a processor 101, a memory 102, a storage 103, and a communication device 104.

The processor 101 executes programs, to thereby control respective components of the server 100 and perform processing for implementing functions of the server 100. As the processor 101, for example, a central processing unit (CPU) is used.

The memory 102 is a computer-readable recording medium, and stores programs to be executed by the processor 101. As the memory 102, for example, a random access memory (RAM) or a read only memory (ROM) is used.

The storage 103 is a computer-readable recording medium, and stores various kinds of data and programs to be used by the processor 101. As the storage 103, for example, a hard disk drive (HDD) or a solid state drive (SSD) is used.

The storage 103 stores a membership database 121 and a vehicle database 122 in advance.

The communication device 104 is connected to the Internet 900, and performs, for example, data communication to/from the user terminal 200 through the Internet 900.

The user terminal 200 is an information terminal such as a personal computer, a tablet terminal, or a smartphone that is used by a member who is a user.

FIG. 3 is a hardware configuration diagram of the user terminal 200.

The user terminal 200 includes a processor 201, a memory 202, a storage 203, an operating device 204, a display device 205, and a communication device 206.

The processor 201 executes programs, to thereby control respective components of the user terminal 200 and perform processing for implementing functions of the user terminal 200. As the processor 201, for example, a CPU is used.

The memory 202 is a computer-readable recording medium, and stores programs to be executed by the processor 201. As the memory 202, for example, a RAM or a ROM is used. The memory 202 includes an IC chip.

The storage 203 is a computer-readable recording medium, and stores various kinds of data and programs to be used by the processor 201. As the storage 203, for example, a hard disk drive (HDD), a solid state drive (SSD), or a flash memory is used.

The operating device 204 is a device that is used for operating the user terminal 200. Examples of the operating device 204 include a keyboard and a mouse of a personal computer and a touch panel of a smartphone or a tablet terminal.

The display device 205 displays various screens. As the display device 205, for example, a liquid crystal display is used. The display device 205 may be configured as a touch panel integrally with a touch sensor.

The communication device 206 is connected to the Internet 900, and performs data communication to/from the server 100 through the Internet 900.

The business operator terminal 300 is an information terminal installed in a business establishment (SS). Examples of the business operator terminal 300 include a personal computer, a tablet terminal, and a smartphone.

A hardware configuration of the business operator terminal 300 is substantially the same as that of the user terminal 200, and hence detailed description thereof is omitted.

The business operator (business establishment) is assumed to be present in each of various places in the country, but the present disclosure is not limited thereto.

The payment agent device 400 is a device installed in a payment agent company such as a credit card company. The payment agent device 400 is an information processing device that executes payment agency processing such as credit card payment.

The transportation facility device 600 is an information processing device installed in a public transportation facility or a company associated therewith.

The public transportation facility refers to a transportation facility that provides traveling means that can be used by an indefinitely large number of people.

The traveling means includes railways such as Japan Railways (JR) and a subway, a bus, a taxi, an airplane, and a ship. The traveling means does not include the vehicle 500 to be lent out by the business operator.

Hardware configurations of the payment agent device 400 and the transportation facility device 600 are each substantially the same as that of the server 100, and hence detailed description thereof is omitted.

The vehicle 500 is traveling means to be lent out to a user, and an automobile such as an internal combustion engine vehicle or an electric vehicle (hereinafter also referred to as "EV") is adopted as the vehicle 500.

The internal combustion engine vehicle travels by combusting a fuel such as gasoline and using a combustion gas resulting therefrom to drive an engine.

The EV includes a storage battery (battery), and travels by driving a motor through use of electric power stored in the storage battery by charging.

The vehicle 500 provided by the business operator is not limited to a four-wheeled automobile, and may be any one of various other traveling means (such as a two-wheeled vehicle or a drone).

Some electric vehicles are called "micro EVs" having a size equivalent to or smaller than that of a light vehicle.

Examples of the micro EV include those having a boarding capacity of four persons or less, a maximum speed of 60 km/h or lower, a rated output of 0.6 kW or more, a length of 2.5 m or less, a width of 1.3 m or less, a height of 2.0 m or less, and a maximum loading amount of 350 kg or less.

The storage battery provided to the micro EV has a capacity of 9 kWh to 10 kWh (one-cell type) and a charging time of 5 hours to 16 hours, and achieves a cruising distance of about 100 km to about 150 km under a full charge state.

The vehicle 500 is provided with a lock control device (not shown) that controls locking and unlocking of a door.

The lock control device includes a card reader, an electric lock, a control device, a communication device, and a key box.

The card reader is a device that reads a driver's license number from a driver's license (that is, IC card driver's license), and is installed, for example, on an inner side of a door glass.

Thus, when the user holds the driver's license over the glass, the card reader reads the driver's license number from the driver's license through the glass.

The control device is a device that controls each element of the lock control device, and transmits, to the server 100, the driver's license number read by the card reader together with a vehicle ID. A communication device is used for transmitting data to the server 100.

The communication device executes wireless communication to/from the server 100 in accordance with a predetermined wireless communication standard (for example, 4G, such as long-term evolution (LTE), or 5G).

The server 100 manages the vehicle ID of the share car for which a reservation has been confirmed and the driver's license number of the member in association with each other.

When the driver's license number received from the vehicle 500 is managed as reservation information, the server 100 transmits, to the vehicle 500, authentication information indicating that authentication has been successful.

In the vehicle 500, when the authentication information is received from the server 100, the control device controls the electric lock to unlock or lock the door.

The key box houses a key for driving the vehicle 500.

The vehicle 500 can be driven by removing the key from the key box and inserting the key into a key cylinder provided to a driver's seat.

The control device monitors an insertion state of the key in the key box, and when the control device detects a state in which the key has been removed, transmits usage start information to the server 100 together with the vehicle ID. After that, when the control device detects a state in which the key has been inserted, the control device transmits usage end information to the server 100 together with the vehicle ID.

Further, the vehicle 500 is provided with positioning means such as a global navigation satellite system (GNSS).

In addition to the driver's license in which the driver's license number is recorded, it is also possible to use, for the locking and unlocking, another IC card, a smartphone, or the like in which information or the like that can identify the member who has made a reservation is recorded as authentication information.

Further, the above-mentioned method for the unlocking and locking is applied only to the share car, and the subscription vehicle can be unlocked and locked only with a key handed to the user.

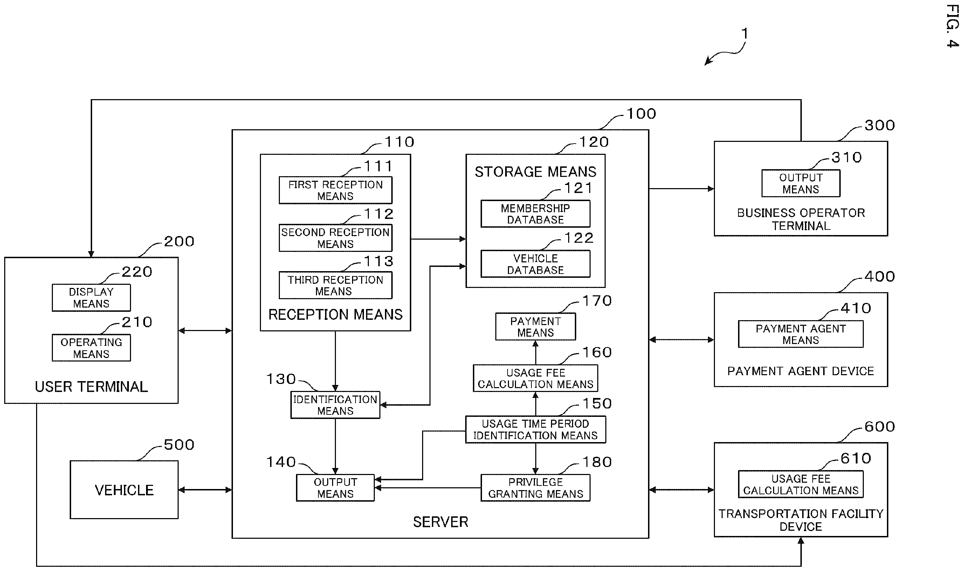

FIG. 4 is a functional configuration diagram of the information processing system 1.

As illustrated in FIG. 4, the user terminal 200 includes operating means 210 and display means 220.

The user terminal 200 is used to, for example, apply for a membership for the subscription, the car share, or the like, display a recommendation route based on input of a destination, and accept a recommendation.

In regard to functions of the user terminal 200, the processor 201 executes a program stored in the memory 202, to thereby perform an arithmetic operation or control each component of the user terminal 200.

The operating means 210 executes various operations on the operating device 204.

Specifically, information required for a membership application is input in response to an operation performed by the user on the operating device 204. In response to various operations, the input information is transmitted from the user terminal 200 to the server 100.

The information that is transmitted from the user terminal 200 to the server 100 includes membership application information, destination information, the reservation information on the share car, and recommendation acceptance verification information.

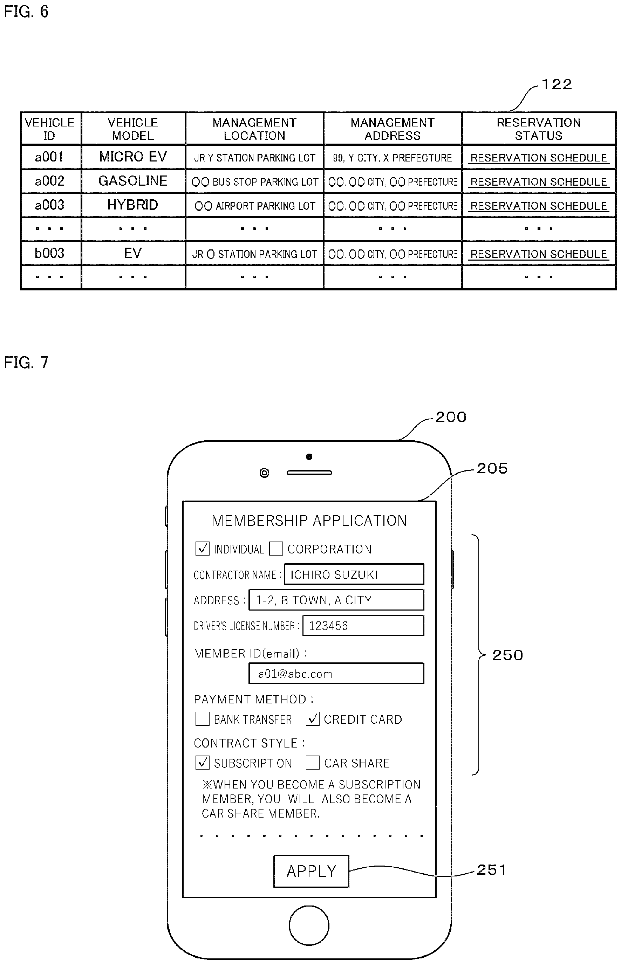

The display means 220 displays various screens (FIG. 7 to FIG. 14) on the display device 205.

The operating means 210 inputs the membership application information, the destination information, the reservation information on the share car, and the recommendation acceptance verification information through a predetermined operation.

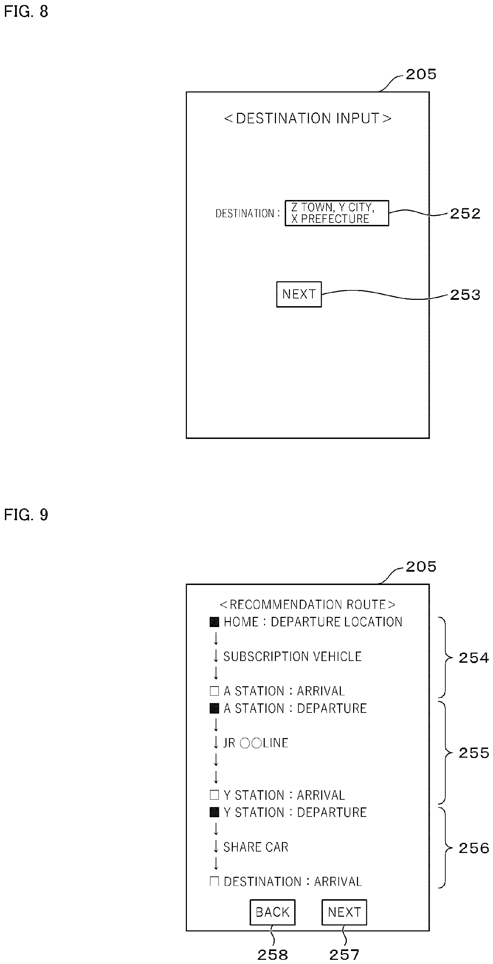

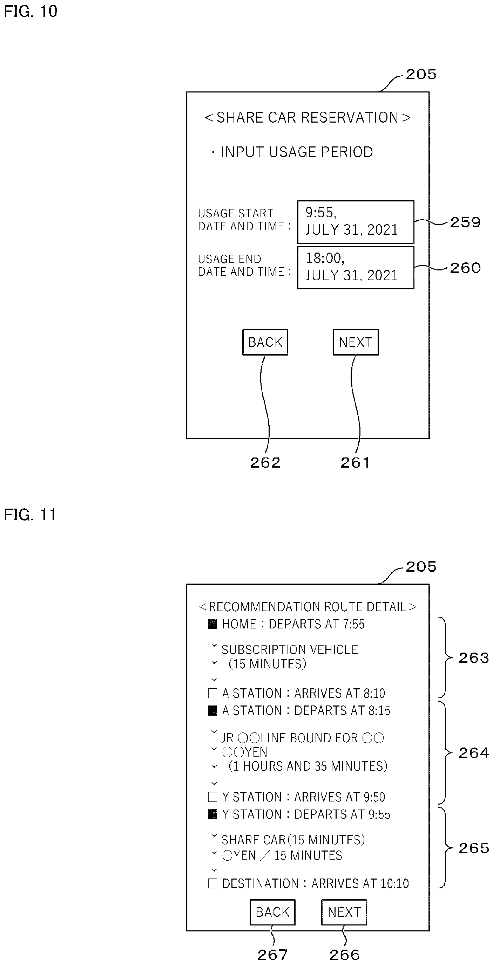

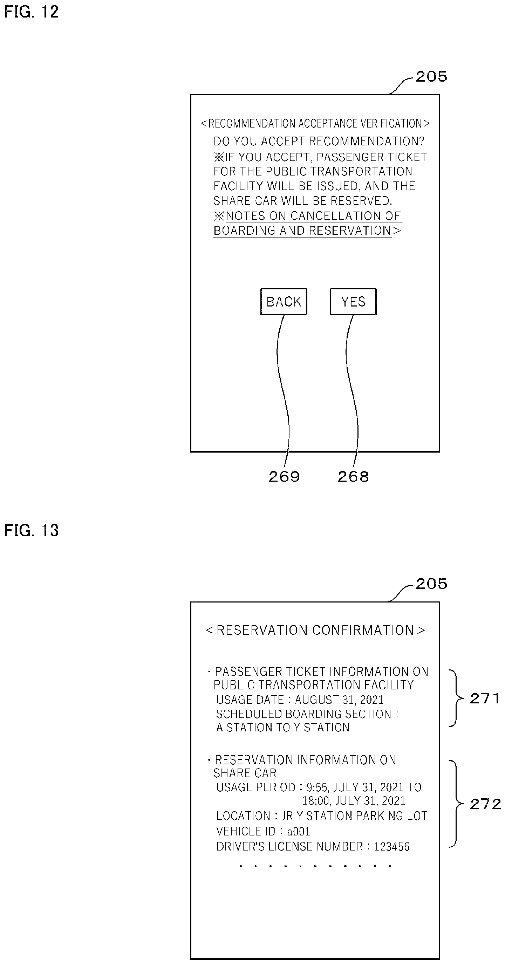

Specifically, various kinds of information are input through touching operation on a membership application screen (FIG. 7), a destination input screen (FIG. 8), a share car reservation screen (FIG. 10), and a recommendation acceptance verification screen (FIG. 12) that are displayed on the display device 205.

FIG. 7 is a view for illustrating an example of the membership application screen.

The membership application screen is a screen to be displayed at a time of performing membership registration.

In the information processing system 1 according to this embodiment, it is possible to perform an application operation relating to an admission to any one of a subscription membership or a car share membership.

As illustrated in FIG. 7, the membership application screen is formed of an area 250 for inputting pieces of registration information such as an individual or corporation (user type), a contractor name, an address, a driver's license number, a member ID (email), a payment method, and a contract style (subscription or car share), and each of the pieces of registration information can be input through a selection operation or an input operation.

The input registration information (membership application information) is transmitted from the user terminal 200 to the server 100 through pressing of an "APPLY" button 251.

FIG. 8 is a view for illustrating an example of the destination input screen.

The destination input screen is a screen to be displayed when there is an operation (recommendation requesting operation) for requesting the user terminal 200 to display a recommendation route screen.

As illustrated in FIG. 8, the destination input screen is formed of an area 252 for inputting a destination, and a desired destination (arrival location) can be input through an input operation.

Information (destination information) indicating the destination is transmitted to the server 100 through pressing of a "NEXT" button 253. After that, the screen transitions to the recommendation route screen (FIG. 9).

FIG. 9 is a view for illustrating an example of the recommendation route screen.

The recommendation route screen is a screen for recommending an optimum travel route for moving to the destination, and is formed of an area 254 for displaying a first travel route, an area 255 for displaying a second travel route, and an area 256 for displaying a third travel route.

When a "NEXT" button 257 is pressed, the screen transitions to the share car reservation screen (FIG. 10), and when a "BACK" button 258 is pressed, the screen transitions to the destination input screen (FIG. 8).

FIG. 10 is a view for illustrating an example of the share car reservation screen.

The share car reservation screen is a screen for inputting the usage period of the share car, and is specifically formed of an area 259 for inputting "USAGE START DATE AND TIME" and an area 260 for inputting "USAGE END DATE AND TIME."

When a "NEXT" button 261 is pressed, the input usage period of the share car is transmitted to the server 100. After that, the screen transitions to a recommendation route detail screen (FIG. 11).

When a "BACK" button 262 is pressed, the screen transitions to the recommendation route screen (FIG. 9).

The share car reservation screen illustrated in FIG. 10 is a screen to be displayed when the subscription member uses both the subscription vehicle and the share car, and is different from a normal share car reservation screen (not shown).

FIG. 11 is a view for illustrating an example of the recommendation route detail screen.

The recommendation route detail screen is formed of an area 263 for displaying the first travel route relating to the subscription vehicle, an area 264 for displaying the second travel route relating to the public transportation facility, and an area 265 for displaying the third travel route relating to the share car.

Further, unlike the recommendation route screen (FIG. 9), the recommendation route detail screen displays detailed information such as departure-and-arrival times and a travel time period for each travel route.

When a "NEXT" button 266 is pressed, the screen transitions to the recommendation acceptance verification screen (FIG. 12), and when a "BACK" button 267 is pressed, the screen transitions to the share car reservation screen (FIG. 10).

FIG. 12 is a view for illustrating an example of the recommendation acceptance verification screen.

The recommendation acceptance verification screen is a screen for verifying whether or not the member accepts (acknowledges) the recommendation route displayed on the recommendation route detail screen (FIG. 11).

When a "YES" button 268 is pressed, the recommendation acceptance verification information is transmitted to the server 100. After that, the screen transitions to a reservation confirmation screen (FIG. 13).

When a "BACK" button 269 is pressed, the screen transitions to the recommendation route detail screen (FIG. 11).

FIG. 13 is a view for illustrating an example of the reservation confirmation screen.

The reservation confirmation screen is a screen to be displayed when the member accepts the recommendation route. Passenger ticket information on the public transportation facility is displayed in an area 271, and the reservation information on the share car is displayed in an area 272.

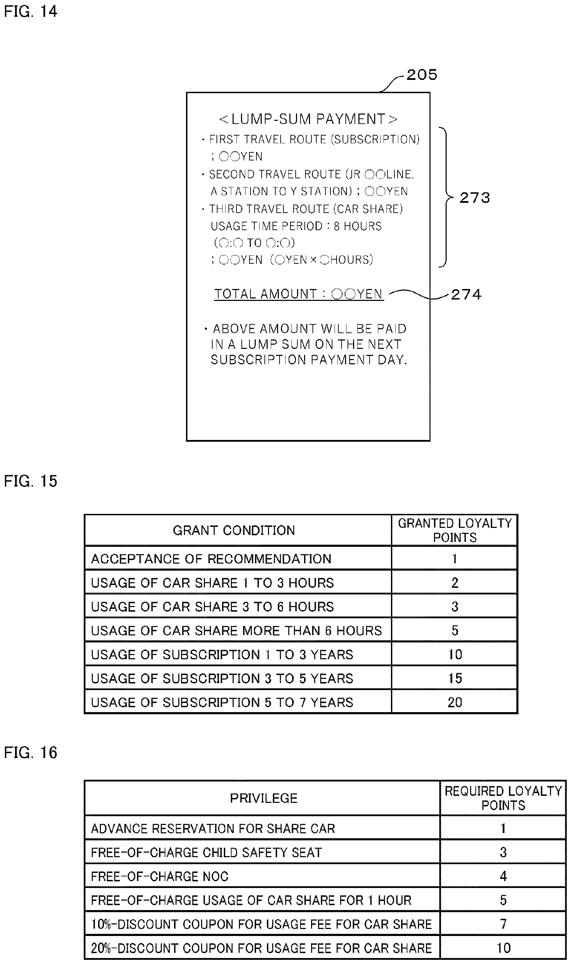

FIG. 14 is a view for illustrating an example of the lump-sum payment notification screen.

The lump-sum payment notification screen is information to be displayed when respective usage fees when the member moves along the recommendation route is paid in a lump sum.

As illustrated in FIG. 14, the lump-sum payment notification screen is formed of an area 273 for showing the first to third travel routes, the respective usage fees therefor, and a breakdown thereof, and an area 274 for showing a total amount of the respective usage fees to be paid in a lump sum.

That is, on the user terminal 200, the display means 220 can display the respective usage fees for the first to third travel routes and the total amount thereof on the display device 205.

The respective usage fees for the first to third travel routes and the total amount thereof are information included in information on the recommendation route that is output (transmitted) by output means 140 of the server 100, which is described later.

As illustrated in FIG. 4, the server 100 includes reception means 110, storage means 120, identification means 130, the output means 140, usage time period identification means 150, usage fee calculation means 160, payment means 170, and privilege granting means 180.

The server 100 executes various kinds of processing, for example, receives registration of a member, duplicately registers the member as a car share member when the registration of a subscription member is received, identifies the recommendation route, grants a privilege to the member, and calculates the usage fee used for payment.

In regard to functions of the server 100, the processor 101 executes a program stored in the memory 102 or the storage 103, to thereby perform an arithmetic operation or control each component of the server 100.

The reception means 110 is means for receiving the information transmitted from the user terminal 200 or the like, and includes first reception means 111, second reception means 112, and third reception means 113.

The first reception means 111 executes processing for receiving registration of a first member of a first vehicle lending service in which the usage period of the vehicle 500 is a first period.

The second reception means 112 executes processing for receiving registration of a second member of a second vehicle lending service in which the usage period of the vehicle 500 is a second period shorter than the first period.

That is, in the information processing system 1 according to this embodiment, the first reception means 111 receives registration for a subscription membership having a medium-to-long-term contract period, and the second reception means 112 receives registration for a car share membership having an ultra-short-term contract period.

Specifically, in the operation (FIG. 7) for the membership application performed through the user terminal 200, when the server 100 receives the membership application information indicating that "SUBSCRIPTION" has been selected, the server 100 receives the registration of "SUBSCRIPTION MEMBER," and when the server 100 receives the membership application information indicating that "CAR SHARE" has been selected, the server 100 receives the registration of "CAR SHARE MEMBER."

The storage means 120 stores in advance the membership database 121 and the vehicle database 122 in the storage 103.

The storage means 120 stores, based on the reception performed by the first reception means 111, registration information that sets the user as the subscription member (first member), and stores, based on the reception performed by the second reception means 112, registration information that sets the user as the car share member (second member).

Specifically, when the reception means 110 receives the registration of the subscription member, the server 100 stores the registration information indicating the subscription member in the membership database 121, and when the reception means 110 receives the registration of the car share member, the server 100 stores the registration information indicating the car share member in the membership database 121.

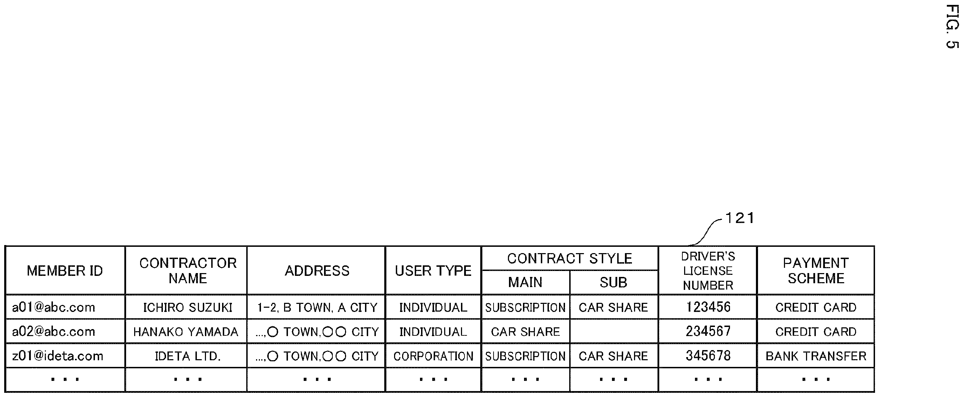

FIG. 5 is a table for showing an example of the membership database 121.

As illustrated in the figure, the membership database 121 is formed of the member ID (email), the contractor name, the address, the user type (corporation or individual), the contract style (subscription membership or car share membership), the driver's license number, the payment scheme, and the like.

For example, "HANAKO YAMADA" is an individual member of the car share, and is formed of information indicating that the payment scheme is credit card payment and information indicating the address, the driver's license number, and the like.

"IDETA LTD." is a corporate member of the subscription, and is formed of information indicating that the payment scheme is a bank transfer and the like.

"ICHIRO SUZUKI" is an individual member of the subscription, and is formed of information indicating that the payment scheme is the credit card payment, that the address is 1-2, B Town, A City, that the driver's license number is "123456," and the like.

Membership information on "ICHIRO SUZUKI" is the registration information stored after having been received by the server 100 as a result of inputting the membership application information illustrated in FIG. 7 on the user terminal 200.

In this case, as the contract styles of "ICHIRO SUZUKI" and "IDETA LTD." in FIG. 5, "SUBSCRIPTION" is recorded in a "MAIN" field, and "CAR SHARE" is recorded in a "SUB" field.

This is because, in the information processing system 1, when the user becomes a subscription member, the user is duplicately registered as the car share member as well.

Specifically, the storage means 120 stores, based on the reception performed by the first reception means 111, registration information that sets the user as the car share member (second member) as well as the subscription member (first member).

In contrast, as the contract style of "HANAKO YAMADA," "CAR SHARE" is recorded in the "MAIN" field, and there is no record in the "SUB" field.

That is, this means that even when the user becomes a car share member, the user cannot become a subscription member.

In this manner, the subscription member can duplicately become a car share member, while the car share member cannot duplicately become a subscription member for the following reasons.

That is, the subscription is a service that is provided over a medium-to-long term, and hence the subscription has superior profitability compared to the car share that is a short-period service, and it is expected to further increase profits due to an increase in the number of subscription members by granting the right to use the car share as an added value for each subscription member. In addition, the car share is an ultra-short-term service, and hence only a small membership fee (for example, 2,000 yen per month) can be collected. Thus, even when the membership fee is not collected from the subscription members, there are small losses, while profits from an increase in the number of subscription members due to omission of the subscription fee are larger. In contrast, even when the car share member can become a subscription member, those advantages do not occur.

In addition to the above, for example, a medium-to-long-term subscription member may be able to be duplicately registered as a short-term rental member, or a medium-to-long-term lease member may be able to be duplicately registered as a short-term rental member or an ultra-short-term car share member.

### [Regarding Recommendation Route]

The third reception means 113 receives information indicating the destination.

FIG. 8 is the view for illustrating an example of the destination input screen.

The destination input screen can be displayed on the user terminal 200 of the subscription member in response to a predetermined operation.

FIG. 8 is an illustration of an example in which Ichiro Suzuki, which is the subscription member, has input "Z TOWN, Y CITY, X PREFECTURE" as "DESTINATION."

The input destination information is transmitted from the user terminal 200 to the server 100.

When the server 100 receives the destination information from the user terminal 200, the third reception means 113 receives the destination information, and passes the information indicating the destination to the identification means 130.

The identification means 130 identifies a travel route (recommendation route) to be used at a time of moving to the destination through use of the subscription vehicle (first vehicle), the share car (second vehicle), and another traveling means (railway) based on first position information indicating a position of the subscription vehicle, second position information indicating a position of the share car (second vehicle), position information on the destination, and third position information indicating a position (for example, JR station) at which the user can get on and off another traveling means (public transportation facility such as JR) different from the vehicle provided by the vehicle lending service. An example of a method of identifying the recommendation route is described below.

In a case of the individual member, the subscription vehicle is managed in a parking space at the home of the member.

Thus, in the case of the individual member, a departure location of the recommendation route is determined to be the address of the home of the member at which the subscription vehicle is managed.

The departure location, that is, the position of the subscription vehicle may be any location other than the home of the member, for example, any address can be designated, current position information on the subscription vehicle identified by the positioning means can be received and used, or in a case of the corporate member, an address of a parking lot of the company or a home of a representative employee can also be used.

The position (second position information) of the share car is a management location close to the destination (for example, in the nearest neighborhood or within a fixed distance), and the server 100 searches the vehicle database 122 and identifies the vehicle 500 managed at the management location.

For example, when the destination is "Z TOWN, Y CITY, X PREFECTURE" (FIG. 8), an address of the management location close to the destination "Z TOWN, Y CITY, X PREFECTURE" is the second position information, and the server 100 extracts the vehicle 500 being managed at the management location from the vehicle database 122 as the share car.

FIG. 6 is a table for showing an example of the vehicle database 122 relating to the share car.

As illustrated in the figure, the vehicle database 122 stores information such as management locations of the vehicles 500 that can be lent out as share cars.

For example, in the vehicle database 122 of FIG. 6, the micro EV having a vehicle ID of a001 is being managed in JR Y Station Parking Lot (99, Y City, X Prefecture), or a gasoline vehicle having a vehicle ID of a002 is being managed in ∘∘ Bus Stop Parking Lot (∘∘, ∘∘ City, ∘∘ Prefecture).

In this case, it is assumed that "JR Y Station Parking Lot" (99, Y City, X Prefecture) has been extracted as the management location close to the destination and the "micro EV of a vehicle ID of a001" has been identified as the vehicle 500 being managed there.

That is, a boarding and alighting location for a public transportation facility nearest to the destination is identified as JR Y Station, and the share car can be identified as traveling means for moving from Y Station to the destination. Thus, the third travel route is identified.

In order to identify the boarding and alighting location for the public transportation facility nearest to the destination, a specific type of transportation facility or service, for example, ship, Shinkansen, or limited express may be included in conditions for limiting candidates, or may be excluded from the conditions.

Subsequently, the server 100 uses publicly known software (for example, a map app) to identify a JR station close to the home.

It is assumed that A Station has thus been identified as a JR station close to the home (1-2, B Town, A City) of Ichiro Suzuki, which is the management location (first position information) of the subscription vehicle.

That is, A Station is identified as a boarding and alighting location for a public transportation facility nearest to the departure location, and the first travel route in which the subscription vehicle is used to move from the home (departure location) to JR A Station is identified.

Further, the server 100 identifies the second travel route in which JR is used to move from A Station to Y Station.

That is, the first travel route and the third travel route are thus identified.

In this manner, the server 100 identifies the second position information based on the position information on the destination designated by the member, and identifies the first position information based on the position information on the subscription vehicle, and the identification means 130 can identify the recommendation route relating to a plurality of travel routes based on those pieces of position information.

On the server 100, the output means 140 outputs information relating to the travel route.

Specifically, the output means 140 transmits the information on the recommendation route to the user terminal 200.

Thus, the user terminal 200 can cause the display means 220 to display the information on a recommendation route described below (see FIG. 9).

### [Recommendation Route]

· First travel route: from home to A Station by subscription vehicle
· Second travel route: from A Station to Y Station by JR (railway)
· Third travel route: from Y Station to destination by share car

One recommendation route may be displayed as described above, or a plurality of recommendation routes may be displayed to allow selection therefrom.

For example, two patterns of using JR and using a bus may be displayed for the second travel route.

### [Regarding Reservation for Share Car]

Next, reservation for the share car serving as the traveling means for the third travel route is described.

When the recommendation is accepted (when the "NEXT" button 257 is pressed in FIG. 9), the process advances to the reservation for the share car.

In this case, the subscription member can apply for the reservation for the share car through the share car reservation screen illustrated in FIG. 10.

Specifically, as the usage period, "USAGE START DATE AND TIME" is input to the area 259, and "USAGE END DATE AND TIME" is input to the area 260.

It is assumed here that "9:55, JULY 31, 2021" has been input as the usage start date and time and "18:00, JULY 31, 2021" has been input as the usage end date and time.

When the "NEXT" button 261 is pressed, the reservation information including the usage start date and time and the usage end date and time is transmitted from the user terminal 200 to the server 100.

At a time of the reservation, a type (such as vehicle model, displacement, EV, or manufacturer) of the vehicle 500 may be allowed to be designated.

When the server 100 receives the reservation information, the server 100 refers to a reservation schedule (not shown) to examine whether or not there is any available vehicle 500 among the vehicles 500 being managed in "JR Y Station Parking Lot" (99, Y City, X Prefecture) during a period from the usage start date and time to the usage end date and time.

In the "reservation schedule," for example, the usage period of the vehicle 500 is recorded for each vehicle ID, and it is possible to determine which vehicle 500 is available during which period.

As a result, when the vehicle 500 being managed in the "parking lot at Y Station" is available during the usage period, the server 100 holds the vehicle ID and the usage period of the vehicle 500 in a memory or the like to make a temporary reservation.

For the temporary reservation, the vehicle ID and the usage period of the vehicle 500 serving as the share car are confirmed when the recommendation acceptance verification information described later is received.

That is, the reservation is confirmed by overwriting (updating) the usage period corresponding to the vehicle ID of the reserved vehicle 500 in the reservation schedule.

When there are a plurality of reservable vehicles 500, the server 100 can transmit pieces of information respectively indicating the plurality of reservable vehicles 500 to the user terminal 200 and cause the user terminal 200 to display the pieces of information in a selectable manner (not shown).

In contrast, when no reservable vehicle 500 is present or available, the server 100 can also transmit information indicating to that effect to the user terminal 200 and cause the user terminal 200 to display the information.

In this case, the member can change the reservation by, for example, returning to the share car reservation screen (FIG. 10) to re-input the usage period or by returning to the destination input screen (FIG. 8) to re-input the destination.

### [Regarding Recommendation Route Details]

The server 100 can also cause the identification means 130 to identify detailed information on the recommendation route to which the travel time period and arrival-and-departure times for each of the first to third travel routes in the recommendation route are added, and cause the user terminal 200 to display the detailed information (see FIG. 11). An example of a method of identifying recommendation route details is described below.

First, the server 100 calculates a travel time period after the share car departs from Y Station until the share car reaches the destination on the third travel route.

The "travel time period for the third travel route" can be calculated based on a travel distance of and a traveling speed for the third travel route.

As the "travel distance of the third travel route," a distance between Y Station and the destination can be calculated through use of, for example, publicly known software.

The "traveling speed for the third travel route" is set to, for example, 30 km/h for the micro EV and 40 km/h for another vehicle. The traveling speed is not limited thereto, and can be set to any speed.

As a result, it is assumed here that the travel time period for the third travel route has been calculated to be "15 minutes."

Subsequently, the server 100 identifies, as an arrival time at the destination, a time point obtained by adding the "travel time period for the third travel route" to the "USAGE START DATE AND TIME."

Thus, it can be identified that the travel time period for the "third travel route" is 15 minutes, the departure from Y Station is at 9:55, and the arrival at the destination is at 10:10.

Subsequently, the server 100 refers to a publicly known train schedule database or the like to identify a service name (destination) of a train that can arrive at Y Station immediately before the usage start date and time and departs or passes through A Station.

For example, when "USAGE START DATE AND TIME" is 9:55, 2021, it is possible to identify a railway service "JR line ∘∘ bound for ∘∘" that arrives at Y Station at 9:50 and departs from A Station at 8:15.

Thus, it can be identified that the travel time period for the "second travel route" is 1 hour and 35 minutes, the departure from A Station is at 8:15, and the arrival at the Y Station is at 9:50.

Next, the server 100 calculates a travel time period after the subscription vehicle departs from the home until the subscription vehicle reaches A Station on the first travel route.

The "travel time period forthe first travel route" can be calculated based on a travel distance of and a traveling speed for the first travel route.

As the "travel distance of the first travel route," a distance between the home and A station can be calculated through use of, for example, publicly known software.

The "traveling speed for the first travel route" is set to, for example, 30 km/h for the micro EV and 40 km/h for another vehicle.

It is assumed here that the travel time period forthe third travel route has been calculated to be "15 minutes."

Thus, in consideration of a transit time period (assumed to be 5 minutes) at A Station, a time point "8:10" obtained by subtracting the transit time period from the departure time at A Station can be identified as an arrival time at A Station, and a time point "7:55" obtained by subtracting the travel time period "15 minutes" from the arrival time can be identified as the departure time at the home.

That is, it can be identified that the travel time period for the "first travel route" is 15 minutes, the departure from the home is at 7:55, and the arrival at A Station is at 8:10.

The identification means 130 can identify the detailed information on the recommendation route (travel time periods and departure-and-arrival times for the recommendation route and each travel route) in this manner.

The recommendation route can be identified not only for an outward route but also for a return route.

On the server 100, the output means 140 outputs information relating to the travel route.

Specifically, information indicating the detailed information on the recommendation route (recommendation route and travel time period, departure-and-arrival times, and usage fee for the recommendation route) is transmitted to the user terminal 200.

Thus, the user terminal 200 can display the detailed screen based on the received detailed information on the recommendation route.

Specifically, the user terminal 200 can display, as listed below, details of the recommendation route (see FIG. 11) obtained by adding the "travel time period, departure-and-arrival times, and usage fee for each travel route" to the recommendation route (FIG. 8).

### [Travel Time Period, Departure-and-arrival Times, and Usage Fee for Each Travel Route]

· "First travel route": from home to A Station by subscription vehicle; travel time period of 15 minutes; departure from home at 7:55; and arrival at A Station at 8:10
· "Second travel route": from A Station to Y Station by JR (railway); travel time period of 1 hour and 35 minutes; departure from A Station at 8:15; arrival at Y Station at 9:50; and usage fee (fare) of ∘∘ yen
· "Third travel route": from Y Station to destination by share car; travel time period of 15 minutes; departure from Y Station at 9:55; arrival at destination at 10:10; and usage fee with unit fee of ∘ yen/15 minutes

The user terminal 200 can also display the total amount of the usage fees.

Thus, the member can examine the details of the recommendation route.

When the user presses a "NEXT" button 268 on the recommendation route detail screen, the screen transitions to the recommendation acceptance verification screen (FIG. 12).

When a "NEXT" button 268 is pressed on the recommendation acceptance screen, the recommendation acceptance verification information indicating that the recommendation route has been accepted is transmitted from the user terminal 200 to the server 100. That is, in this case, the recommendation route details (including reservations for the public transportation facility and the share car) have been acknowledged.

When the server 100 receives the recommendation acceptance verification information, the server 100 transmits, to the transportation facility device 600, request information for requesting issuance of a passenger ticket for JR (public transportation facility), and executes processing for confirming the reservation for the share car.

### (Passenger Ticket Issuance etc.)

When the transportation facility device 600 receives the request information from the server 100, the transportation facility device 600 issues passenger ticket information on JR, and transmits the passenger ticket information to the server 100.

The passenger ticket information includes the member ID and information indicating that boarding is limited to a predetermined day (boarding date of August 31, 2021 for JR in the recommendation route details).

In addition, information indicating that a boarding station is limited to A Station or information indicating that an alighting station is limited to Y Station can be included in the passenger ticket information.

The server 100 transmits the passenger ticket information received from the transportation facility device 600 to the user terminal 200.

When the user terminal 200 receives the passenger ticket information, the user terminal 200 stores the passenger ticket information in the memory 202 (IC chip).

Thus, only on the predetermined day, when the user terminal 200 is held over a ticket gate machine of a JR station, the ticket gate machine can read the passenger ticket information from the IC chip to allow passage therethrough. That is, only on a predetermined day, the member can board at A Station and alight at Y Station.

At this time, in addition to the member ID included in the passenger ticket, the ticket gate machine transmits, to the transportation facility device 600, public transportation facility usage information such as information on an actually used boarding station and an actually used alighting station, a boarding date and time, and an alighting date and time.

Thus, the transportation facility device 600 can identify a boarding section and a usage fee regarding the member who used JR based on the public transportation facility usage information received from the ticket gate machine.

In other public transportation facilities such as a bus, an airplane, and a ship, it is also assumed that devices having the same functions as those of the ticket gate machines are provided in the traveling means and at the boarding and alighting locations (bus, bus stop, airport, ship, port, and the like).

### (Share Car Reservation Confirmation etc.)

When the server 100 receives the recommendation acceptance verification information, the server 100 confirms the reservation for the share car.

Specifically, the server 100 stores the reservation information for confirming the reservation for the vehicle 500 that can be used during the usage period input on the share car reservation screen (FIG. 10) as the share car for the third travel route identified on the recommendation route detail screen (FIG. 11).

When the server 100 issues the passenger ticket information on a public transportation facility and confirms the reservation for the share car, the server 100 transmits reservation confirmation information to the user terminal 200.

When the user terminal 200 receives the reservation confirmation information from the server 100, the user terminal 200 displays the reservation confirmation screen (FIG. 13).

The reservation information stored on the server 100 is formed of a numerical value "1" indicating permission for usage of the vehicle 500, the member ID, the driver's license number, the vehicle ID of the reserved vehicle 500, the usage period, and the like.

When the member holds the driver's license over the card reader of the reserved vehicle 500 during the reserved usage period, the read driver's license number is transmitted to the server 100, and the server 100 performs authentication based on inclusion of the received driver's license number in the reservation information, and when the authentication has been successful, transmits the authentication information indicating that authentication has been successful to the vehicle 500 having the vehicle ID.

When the vehicle 500 receives the authentication information, the lock control device, for example, unlocks the door to enable the usage as the share car to be started.

The server 100 receives the usage start information or the usage end information involved in a usage start and a usage end of the vehicle 500.

Thus, on the server 100, the usage time period identification means 150 can identify an actual usage time period (period) for the share car based on the reception of the usage start information and the usage end information.

On the server 100, the usage fee calculation means 160 calculates the usage fee for the share car based on the usage time period identified by the usage time period identification means 150.

For example, when the unit fee forthe share car is 300 yen/15 minutes and the usage time period is 8 hours, the usage fee is calculated to be (300 yen)×4×(8 hours)=9,600 yen.

On the server 100, the payment means 170 executes, as normal payment processing, payment processing for a usage fee forthe subscription vehicle (first vehicle) in the subscription (first vehicle lending service) and payment processing for a usage fee for the share car (second vehicle) in the car share (second vehicle lending service).

For example, the subscription member is charged for a monthly-flat-rate usage fee (for example, 30,000 yen) for the subscription vehicle, and it is verified that payment thereof has been performed.

The car share member is charged for a usage fee (in the above-mentioned example, 9,600 yen) for the share car calculated by the usage fee calculation means 160, and it is verified that payment thereof has been performed.

The payment means 170 executes, as the normal payment processing, payment processing in various services individually in the above-mentioned manner.

The payment means 170 can execute lump-sum payment processing for collectively paying the usage fee for the subscription vehicle (first vehicle), the usage fee for the share car (second vehicle), and the usage fee for the public transportation facility (another transportation means).

That is, the payment means 170 performs the lump-sum payment processing on the usage fee for the subscription vehicle (first vehicle) and the usage fee for the share car (second vehicle).

In the present application, collectively paying or performing the lump-sum payment processing as used herein means that all of a plurality of services such as the usage fee for the subscription vehicle or the usage fee for the share car vehicle are collectively paid, or some of the plurality of services are individually paid, but the remaining plurality of services may be collectively paid. This enables that the user of the services is not required to individually handle the payments of at least two or more services. Accordingly, it suffices that at least two or more services are collectively paid when viewed from the user of the services, and hence respective kinds of payment processing for the plurality of services may be performed simultaneously in time, or may be performed at different timings.

In the information processing system 1 according to this embodiment, the lump-sum payment processing is executed when the recommendation is accepted.

Specifically, when the server 100 receives the recommendation acceptance verification information, the server 100 stores lump-sum payment setting information indicating that the usage fee is to be paid in a lump sum in association with the member ID of the member.

That is, when the lump-sum payment setting information is stored for the member ID of the member (subscription member) who has finished using the car share by, for example, receiving the usage end information on the car share, the server 100 executes the lump-sum payment processing for collectively paying the usage fee for the subscription vehicle, the usage fee for the public transportation facility, and the usage fee for the share car.

That is, the payment means 170 can execute the lump-sum payment processing for collectively paying, based on the lump-sum payment setting information, the usage fee forthe subscription vehicle (first vehicle), the usage fee for the share car (second vehicle), and the usage fee for another traveling means.

The information processing system 1 according to this embodiment commissions a credit card company, which is a payment agent company, to perform payment agency.

Thus, the payment processing (including the lump-sum payment) forthe usage fee is substantially executed by the payment agent device 400 described later.

On the server 100, the payment means 170 transmits, to the payment agent device 400, payment agency request information including the usage fees for the vehicles 500 (the usage fee for the subscription vehicle and the usage fee forthe carshare) and a total amount of money obtained by adding the usage fee forthe public transportation facility thereto.

That is, when the payment agent company such as a credit card company is commissioned to perform payment agency, the payment means 170 of the server 100 transmits, to the payment agent device 400, the payment agency request information including the total amount of money obtained by adding the usage fee for the public transportation facility to the usage fees for the vehicles 500.

### [Regarding Privilege Grant]

On the server 100, the privilege granting means 180 grants a privilege to the member when a condition is satisfied.

In particular, the privilege granting means grants a privilege to the member when it is indicated that the member has acknowledged the output of the recommendation route information performed by the output means 140.

Specifically, when the subscription member acknowledges the recommendation route (travel route) identified by the identification means 130 (when the "YES" button 268 is pressed on the recommendation route acceptance verification screen illustrated in FIG. 12), a privilege is granted to the subscription member.

Specifically, the privilege is given in accordance with the number of accumulated loyalty points.

FIG. 15 is a table for showing an example of a granted loyalty point table.

The granted loyalty point table defines various grant conditions and loyalty points to be granted when the grant conditions are satisfied.

For example, the member who has accepted the recommendation is granted 1 loyalty point, the member who has used the car share for one to three hours is granted 2 loyalty points, and the member who has used the subscription for 1 to 3 years is granted 10 loyalty points.

The "recommendation acceptance" can include the fact that the user has actually moved in accordance with the recommendation, and it is also possible to grant a relatively larger number of loyalty points when it is verified that the user has actually moved in accordance with the recommendation.

For example, it is also possible to add 1 loyalty point when the user has moved in accordance with the second travel route, add 1 loyalty point when the user has moved in accordance with the third travel route, and add 5 loyalty points when the user has moved in accordance with all the travel routes.

In this manner, the server 100 adds first loyalty points when the user has moved in accordance with some of the travel routes based on the recommendation, and adds second loyalty points the number of which is larger than that of the first loyalty points when the user has moved in accordance with all the travel routes.

In FIG. 16, various privileges and the number of loyalty points required for being granted the privileges are defined.

For example, an advance reservation for a new-model share car requires accumulation of 1 loyalty point, free-of-charge grant of a child safety seat requires accumulation of 3 loyalty points, and free-of-charge grant of an NOC requires accumulation of 4 loyalty points.

There are also privileges corresponding to usage of the car share.

"CAR SHARE USAGE" shown in FIG. 16 indicates usage of the car share by the subscription member. This enables enhancement of the added value for the subscription member and expected increases in the number of subscription members and in profits. Loyalty points may be simply granted for "CAR SHARE USAGE" by the car share member.

The business operator terminal 300 includes output means 310. On the business operator terminal 300, the processor executes a program stored in the memory, to thereby perform an arithmetic operation or control and implement each component of the business operator terminal 300.

The business operator terminal 300 can receive various kinds of information transmitted from the server 100 and cause the output means 310 to transmit the various kinds of information to the user terminal 200.

That is, in the information processing system 1 according to this embodiment, the output means 140 of the server 100 can directly output various kinds of information to the user terminal 200, while the output means 140 of the server 100 can also output various kinds of information to the business operator terminal 300 and the output means 310 of the business operator terminal 300 can output the various kinds of information to the user terminal 200.

For example, the server 100 can also relay, through the business operator terminal 300, all or part of the information to be transmitted to the user terminal 200.

This enables the business operator to grasp and manage various kinds of information relating to the vehicle lending service.

The transportation facility device 600 includes usage fee calculation means 610. On the transportation facility device 600, the processor executes a program stored in the memory or the storage, to thereby perform an arithmetic operation or control and implement each component of the transportation facility device 600.

The transportation facility device 600 in this embodiment is described with a focus on a function responsible for using JR or calculating the usage fee, but is not limited thereto, and includes the same function provided to each of various public transportation facilities (for example, bus, ship, airplane, and the like).

The transportation facility device 600 identifies the usage fee for the public transportation facility when the usage fee calculation means 610 receives, from the ticket gate machine, the member ID and the public transportation facility usage information such as the information on the actually used boarding station and the actually used alighting station, the boarding date and time, and the alighting date and time.

Specifically, the usage fee calculation means 610 calculates the usage fee for JR based on the boarding section identified by the boarding station and the alighting station.

For example, when a member having a member ID of a001 boarded at A Station and alighted at Y Station, 5,000 yen is calculated as the usage fee for the boarding section of from A Station to Y Station.

The transportation facility device 600 transmits, to the server 100, the usage fee for the public transportation facility calculated by the usage fee calculation means 610 together with the member ID.

When the server 100 receives the usage fee information on the public transportation facility from the transportation facility device 600, the server 100 passes the usage fee information on the public transportation facility to the payment means 170.

The above-mentioned configuration enables the payment means 170 to execute payment of the usage fee for the subscription vehicle (first vehicle), the usage fee for the share car (second vehicle), and the usage fee for the public transportation facility (another traveling means).

That is, on the server 100, the payment means 170 executes payment of not only the usage fees for the first vehicle lending service and the second vehicle lending service but also the usage fee for the public transportation facility.

The payment agent device 400 includes payment agent means 410. On the payment agent device 400, the processor executes a program stored in the memory or the storage, to thereby perform an arithmetic operation or control each component of the payment agent device 400.

The payment agent device 400 receives the payment agency request information from the server 100 (payment means 170) at a time of the payment agency processing.

The payment agency request information includes information on the usage fees for the vehicles 500 (the usage fee for the subscription and the usage fee for the car share) and the total amount of money obtained by adding the usage fee for the public transportation facility thereto.

The payment agent means 410 executes payment agency processing (normal payment) based on the usage fees included in the payment agency request information and payment agency processing based on the total amount of money.

It is assumed that the payment agency processing in this embodiment is credit card payment processing and information (such as a credit card number, a holder full name, an expiration date, and a security code) required for this processing is held in advance.

The payment scheme is not limited to the credit card payment, and it is also possible to use another payment scheme (payment method), for example, bank transfer, account withdrawal, or cashless payment of an advance payment type.

For example, as the normal payment, payment processing for the subscription member is executed on a flat-rate usage fee on a specific subscription payment day monthly during the contract period, and payment processing for the car share member is executed on a usage fee corresponding to the usage period after a share car usage end.

In the lump-sum payment processing in a case in which the subscription member has used the share car and the public transportation facility during the contract period, payment processing is executed on the total amount of the subscription usage fee, a public transportation usage fee, and a car share usage fee on a subscription payment day of a predetermined month after a share car usage month (for example, of a month subsequent to the usage day).

That is, in the lump-sum payment processing in the case in which the subscription member has used the share car and the public transportation facility during the contract period, payment processing may also be executed on the total amount of the subscription usage fee, the public transportation usage fee, and the car share usage fee on the subscription payment day of a predetermined month after the share car usage month.

FIG. 14 is the view for illustrating an example of the lump-sum payment notification screen that can be displayed on the user terminal 200.

A lump-sum payment notification may be issued by the output means 140 of the server 100 transmitting lump-sum payment information indicating details of the lump-sum payment directly to the user terminal 200, or may also be issued through the business operator terminal 300.

Information on the lump-sum payment notification screen and information on the recommendation route detail screen may be displayed side by side so as to be able to be compared to each other.

This allows the member to view differences between the recommendation route and the actual travel route through comparison therebetween.

### [Regarding Information Processing Method]

An information processing method according to the present invention is described.

First, membership registration is described.

In this embodiment, the subscription membership and the car share membership are available as the membership, and the server 100 receives registration for any one of the memberships based on an operation performed through the user terminal 200 (FIG. 7).

When the server 100 receives the registration of the car share member, the server 100 stores, in the membership database 121, registration information that enables the share car to be used (FIG. 5).

When the server 100 receives the registration of the subscription member, the server 100 stores, in the membership database 121, registration information that enables the share car to be lent out together with registration information that enables the subscription vehicle to be used (FIG. 5).

That is, the information processing method according to the present invention includes: a step of receiving registration of a subscription member (first member); a step of receiving registration of a car share member (second member); and a step of storing registration information that sets a user as the subscription member (first member) based on the step of receiving the registration of the subscription member (first member) and storing registration information that sets the user as the car share member (second member) based on the step of receiving the registration of the car share member (second member), the step of storing the registration information including storing, based on the step of receiving the registration of the subscription member (first member), registration information for setting the user as the car share member (second member) while setting the user as the subscription member (first member).

Next, a procedure for processing after login and the like is described.

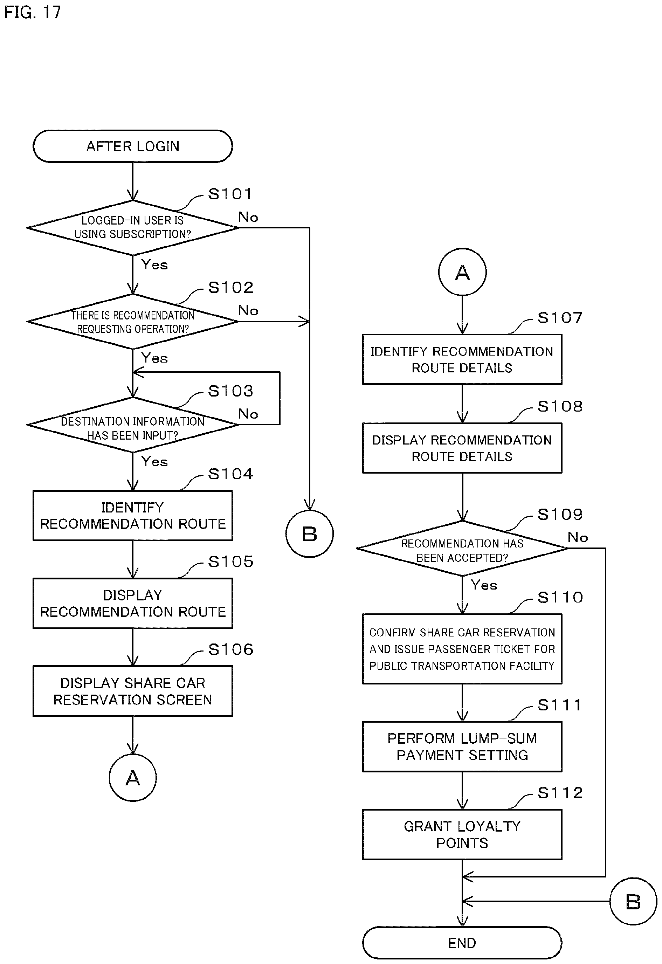

FIG. 17 is a flowchart for illustrating the procedure for the processing after login and the like.

That is, this processing is assumed to be processing that is performed during a logged-in state and to be processing that can be executed only through an operation of a logged-in member.

As illustrated in FIG. 17, first, the server 100 determines whether the logged-in member is a subscription member (Step S101).

Specifically, it is determined whether or not a subscription vehicle has been lent out to the subscription member.

When it is determined that the logged-in member is the subscription member (Yes in Step S101), the user terminal 200 determines (monitors) whether a recommendation requesting operation has been performed (Step S102).

When it is determined that the recommendation requesting operation has been performed (Yes in Step S102), the user terminal 200 determines (monitors) whether destination information has been input (Step S103).

Specifically, it is determined whetherthe destination information has been input through the destination input screen. The input destination information is transmitted to the server 100.

When it is determined that the destination has been input (Yes in Step S103), the server 100 identifies a recommendation route (Step S104).

Specifically, when the server 100 receives the destination information from the user terminal 200, the identification means 130 identifies the recommendation route formed of the first travel route relating to a subscription vehicle, the second travel route relating to a public transportation facility, and the third travel route relating to a share car.

The user terminal 200 displays the recommendation route screen (Step S105).

Specifically, the server 100 causes the output means 140 to output (transmit) information on the identified recommendation route to the user terminal 200.

The user terminal 200 displays the recommendation route screen (FIG. 9) based on the information on the recommendation route received from the server 100.

Subsequently, the user terminal 200 displays the share car reservation screen (FIG. 10) (Step S106).

Specifically, when the subscription member accepts the recommendation shown on the recommendation route screen, the user terminal 200 displays the share car reservation screen.

When a usage period of the share car is input through the share car reservation screen, the user terminal 200 transmits the input usage period to the server 100.

Subsequently, the server 100 causes the identification means 130 to identify detailed information on the recommendation route based on the usage period received from the user terminal 200 (Step S107).

Specifically, a travel time period, departure-and-arrival times, and a usage fee for each traveling means for the first to third travel routes are identified.

The server 100 causes the output means 140 to output the detailed information on the identified recommendation route to the user terminal 200.

The user terminal 200 displays the recommendation route detail screen (FIG. 11) based on the detailed information on the recommendation route received from the server 100 (Step S108).

Subsequently, it is determined whether the recommendation has been accepted (Step S109).

Specifically, it is determined that the recommendation has been accepted based on the fact that the recommendation acceptance verification information has been transmitted from the user terminal 200 to the server 100 in response to the "YES" button 268 being pressed on the recommendation acceptance verification screen (FIG. 12) and the server 100 has received the recommendation acceptance verification information.

When the recommendation has been accepted, the server 100 confirms a reservation forthe share car, and the transportation facility device 600 issues passenger ticket information on the public transportation facility (Step S110).

Thus, the subscription member can move in accordance with the recommendation route.

Further, the server 100 performs lump-sum payment setting for the member who has accepted the recommendation (Step S111). Specifically, the lump-sum payment setting information is stored in association with the member ID.

Further, the server 100 grants loyalty points to the member who has accepted the recommendation (Step S112).

In contrast, when the recommendation has not been accepted, the processing steps of from Step S110 to Step S112 are not executed.

A procedure for car share payment processing is described.

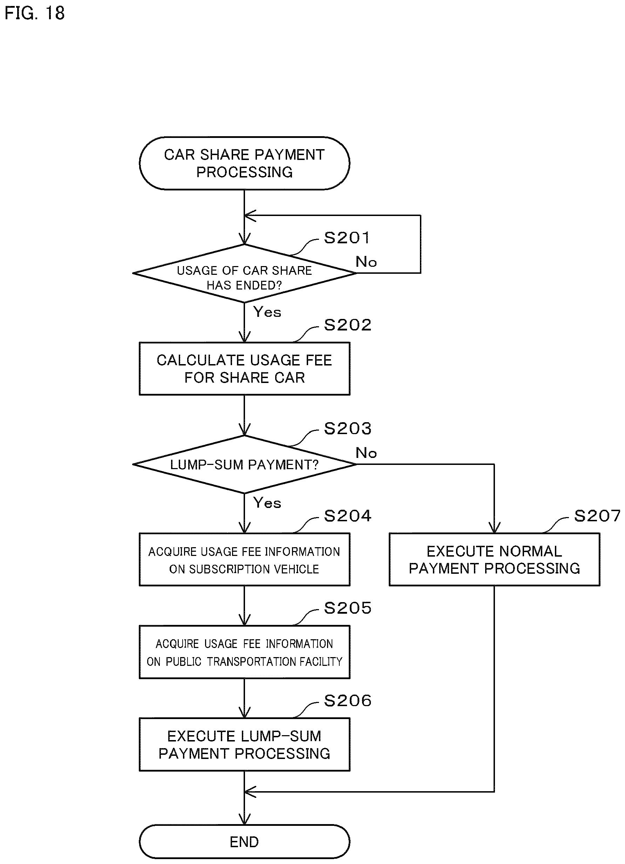

FIG. 18 is a flowchart for illustrating the procedure for the car share payment processing.

As illustrated in FIG. 18, first, the server 100 determines whetherthe usage of the carshare has ended (Step S201).

Specifically, it is determined that the usage of the share car has ended when the server 100 receives the usage end information from the vehicle 500.

Subsequently, the server 100 calculates the usage fee forthe share car the usage of which has ended (Step S202).

Specifically, the usage time period identification means 150 identifies the usage time period based on the usage start date and time and the usage end date and time of the share car, and the usage fee calculation means 160 calculates the usage fee based on the usage period.

Subsequently, it is determined whether or not the lump-sum payment setting has been performed (Step S203).

Specifically, it is determined whether or not the lump-sum payment setting has been performed based on whether or not the lump-sum payment setting information indicating the recommendation acceptance is stored.

When the lump-sum payment setting has been performed (Yes in Step S203), the server 100 acquires the usage fee information on the subscription vehicle (Step S204).

Specifically, monthly-flat-rate usage fee information is acquired on the assumption that a subscription contract is effective.

The server 100 acquires the usage fee information on the public transportation facility (Step S205).

For example, the transportation facility device 600 calculates the usage fee for the public transportation facility based on the public transportation facility usage information received by the usage fee calculation means 610 from the ticket gate machine of the station, and the server 100 receives a result of the calculation.

Then, the server 100 executes the lump-sum payment processing (Step S206).

Specifically, the total amount of the usage fee for the share car calculated in Step S202, the usage fee for the subscription vehicle acquired in Step S204, and the usage fee forthe public transportation facility acquired in Step S205 is calculated, and the total amount of money is paid in a lump sum.

In contrast, when the lump-sum payment setting has not been performed (No in Step S203), the server 100 executes the normal payment processing (Step S207).

Specifically, the usage fee for the subscription vehicle is settled at a flat rate monthly, and each time the share car is used, the usage fee is paid individually.

That is, the information processing method according to the present invention includes a step of executing payment processing for a usage fee for a subscription vehicle (first vehicle) in subscription (first vehicle lending service) and executing payment processing for a usage fee for a share car (second vehicle) in car share (second vehicle lending service), the step of executing the payment processing includes enabling execution of lump-sum payment processing for collectively paying a usage fee for the subscription vehicle (first vehicle) and a usage fee for the share car (second vehicle).

### [Modification Examples]

It is not required to include the travel route for the public transportation facility in the recommendation route.

The identification means 130 identifies a travel route (recommendation route) to be used at a time of moving from a predetermined departure location to a destination through use of the subscription vehicle (first vehicle) and the share car (second vehicle) based on the first position information indicating the position of the subscription vehicle (first vehicle), the second position information indicating the position of the share car (second vehicle), and the position information on the destination.

In the information processing system 1, the subscription member can become the share car member as well, and hence the travel route for a combination of the subscription vehicle and the share car is identified as the recommendation route through an arithmetic operation.

Thus, for example, for an individual subscription member, it becomes easier to use the share car as a large vehicle at a time of having guests.

The payment means 170 can execute the lump-sum payment processing for collectively paying the usage fee forthe subscription and the usage fee for the car share when, for example, the subscription member has used the car share during a subscription contract period.

In the lump-sum payment processing in the case in which the subscription member has used the share car during the contract period, it suffices that payment processing is executed on the total amount of the subscription usage fee and the car share usage fee on the subscription payment day of the month subsequent to the share car usage month.

As described above, the server 100 in this embodiment is an information processing device for executing information processing in a vehicle lending service for lending out a vehicle to a user. The information processing device includes: first reception means for receiving registration of a first member being a member of a first vehicle lending service for which a usage period of the vehicle forthe user is a first period; second reception means for receiving registration of a second member being a member of a second vehicle lending service for which the usage period of the vehicle forthe user is a second period shorterthan the first period; storage means for storing registration information that sets the user as the first member based on the reception performed by the first reception means and storing registration information that sets the user as the second member based on the reception performed by the second reception means; and payment means for executing payment processing for a usage fee for a first vehicle in the first vehicle lending service and executing payment processing for a usage fee for a second vehicle in the second vehicle lending service. The storage means is allowed to store, based on the reception performed by the first reception means, registration information that sets the user as the second member while setting the user as the first member. The payment means is allowed to execute lump-sum payment processing for collectively paying the usage fee for the first vehicle and the usage fee for the second vehicle.

According to such a configuration, the subscription member is automatically registered for free of charge as the car share member, and hence it becomes possible to reasonably provide the car share.

It is also possible to enhance convenience of payment.

Thus, there is an advantage to business operators that it is possible to attract an increase or continuation of subscription members excellent in profitability.

Meanwhile, there is an advantage to users that it is possible to reduce a cost required for movement and improve convenience of payment.

For example, it is possible to provide diversification of usage needs in such a mannerthat the share car can be reasonably used, and can be driven when desired and at a desired location, by a corporate subscription member, as described above, when a business trip is made to a distant place or by an individual subscription member as a large vehicle at a travel destination or at a time of having guests.

The preferred embodiment of the present invention has been described above, but it should be understood that the present invention is not limited only to the embodiment described above and various modifications may be made within the scope of the present invention.

For example, in the above-mentioned embodiment, it has been described that the share car is managed in the parking lot at the boarding and alighting location (for example, station) for the public transportation facility, but the share car may be managed in a place other than that, and may be managed at, for example, a business establishment (SS).

In this case, it suffices to identify a station closerto the destination and then identify a business establishment closer to the station or to identify a business establishment closer to the destination and then identify a station closerto the business establishment, and in any case, to identify a recommendation route involving movement using a walk or a taxi from the station to the business establishment.

For the recommendation route, two types, namely, the information on only the travel route and the detailed information thereon have been displayed, but it is possible to, for example, display only the detailed information.

In this case, the destination information and the reservation forthe share car (input of the usage period) may be performed together.

Irrespective of whether or not there is a recommendation, the usage fee forthe subscription vehicle and the usage fee forthe share car can be paid in a lump sum when the car share has been simply used within the subscription contract period, or the usage fee forthe subscription vehicle, the usage fee forthe share car, and the usage fee forthe public transportation facility can be paid in a lump sum when the car share and the public transportation facility have been used within the subscription contract period.

The lump-sum payment may also be executed in a case of being desired by the member separately from the case of the recommendation.

It may also be possible to perform the lump-sum payment of the usage fee for the subscription vehicle, the usage fee for the public transportation facility, and the usage fee for the share car in a case in which the recommendation has been accepted, and to perform the lump-sum payment of the usage fee for the subscription vehicle and the usage fee for the share car when the subscription member has used the share car in a case in which the recommendation has not been accepted.

Without being limited to the lease, the subscription, the rental, and the car share, various contract styles (provision styles) including a combination of some of those can be employed.

For example, the vehicle 500 is not limited to the automobile, and examples thereof may include an electric motorcycle and a kickboard.

Thus, when the subscription vehicle is a micro EV, it is possible to expand a usage style by using an electric motorcycle, a kickboard, or the like.

The configuration of the information processing system 1 is not limited to that in the above-mentioned embodiment, and some or all of the components of one device may be provided to another device in the configuration.

For example, the usage fee calculation means 610 of the transportation facility device 600 may be provided to the server 100 or an external device (for example, payment agent device 400), and the usage fee calculation means 160 and the payment means 170 of the server 100 may be provided to an external device (for example, payment agent device 400).

Further, the procedure of the information processing method is not limited to the above-mentioned procedure, and a part of the procedure may be changed.

For example, the processing for granting loyalty points (Step S112) may be executed immediately after the recommendation acceptance (Yes in Step S109), or may be executed at the time of the payment.

### Reference Signs List

1: information processing system, 100: server, 101: processor, 102: memory, 103: storage, 104: communication device, 110: reception means, 111: first reception means, 112: second reception means, 113: third reception means, 120: storage means, 121: membership database, 122: vehicle database, 130: identification means, 140: output means, 150: usage time period identification means, 160: usage fee calculation means, 170: payment means, 180: privilege granting means, 200: user terminal, 201: processor, 202: memory, 203: storage, 204: operating device, 205: display device, 206: communication device, 210: operating means, 220: display means, 300: business operator terminal, 310: output means, 400: payment agent device, 410: payment agent means, 500: vehicle, 600: transportation facility device, 610: usage fee calculation means, 250: area, 251: "APPLY" button, 252: area, 253: "NEXT" button, 254, 255, 256: area, 257: "NEXT" button, 258: "BACK" button, 259, 260: area, 261: "NEXT" button, 262: "BACK" button, 263, 264, 265: area, 266: "NEXT" button, 267: "BACK" button, 268: "YES" button, 269: "BACK" button, 271, 272: area, 273, 274: area

## Claims

1. An information processing device for executing information processing in a vehicle lending service for lending out a vehicle to a user, the information processing device comprising:
first reception means for receiving registration of a first member being a member of a first vehicle lending service for which a usage period of the vehicle for the user is a first period;
second reception means for receiving registration of a second member being a memberof a second vehicle lending service for which the usage period of the vehicle for the user is a second period shorter than the first period;
storage means for storing registration information that sets the user as the first member based on the reception performed by the first reception means and storing registration information that sets the user as the second member based on the reception performed by the second reception means; and
payment means for executing payment processing for a usage fee for a first vehicle in the first vehicle lending service and executing payment processing for a usage fee for a second vehicle in the second vehicle lending service,
wherein the storage means is allowed to store, based on the reception performed by the first reception means, registration information that sets the user as the second member while setting the user as the first member, and
wherein the payment means is allowed to execute lump-sum payment processing for collectively paying the usage fee for the first vehicle and the usage fee for the second vehicle.

2. The information processing device according to claim 1, further comprising:
third reception means for receiving information indicating a destination;
identification means for identifying a travel route to be used at a time of moving to the destination through use of the first vehicle and the second vehicle, based on first position information indicating a position of the first vehicle, second position information indicating a position of the second vehicle, and position information on the destination; and
output means for outputting information relating to the travel route.

3. The information processing device according to claim 2, wherein the identification means is configured to identify a travel route to be used at a time of moving to the destination through use of the first vehicle, the second vehicle, and another traveling means different from the vehicle provided by the vehicle lending service, based on the first position information, the second position information, the position information on the destination, and third position information indicating a position at which it is allowed to get on and off the another traveling means.

4. The information processing device according to claim 3, wherein the payment means is allowed to execute the lump-sum payment processing for collectively paying the usage fee forthe first vehicle, the usage fee forthe second vehicle, and a usage fee forthe another traveling means.

5. The information processing device according to any one of claims 2 to 4, further comprising privilege granting means for granting a privilege to the member being the user when a condition is satisfied,
wherein the privilege granting means is configured to grant the privilege to the member when it is indicated that the member has acknowledged the output of the information performed by the output means.

6. A program for causing a computer of an information processing device for executing information processing in a vehicle lending service for lending out a vehicle to a user to function as:
first reception means for receiving registration of a first member being a member of a first vehicle lending service for which a usage period of the vehicle for the user is a first period;
second reception means for receiving registration of a second member being a member of a second vehicle lending service for which the usage period of the vehicle for the user is a second period shorter than the first period;
storage means for storing registration information that sets the user as the first member based on the reception performed by the first reception means and storing registration information that sets the user as the second member based on the reception performed by the second reception means; and
payment means for executing payment processing for a usage fee for a first vehicle in the first vehicle lending service and executing payment processing for a usage fee for a second vehicle in the second vehicle lending service,
wherein the storage means is allowed to store, based on the reception performed by the first reception means, registration information that sets the user as the second member while setting the user as the first member, and
wherein the payment means is allowed to execute lump-sum payment processing for collectively paying the usage fee for the first vehicle and the usage fee for the second vehicle.

7. An information processing method for executing information processing in a vehicle lending service for lending out a vehicle to a user, the information processing method comprising the steps of:
receiving registration of a first member being a member of a first vehicle lending service for which a usage period of the vehicle for the user is a first period;
receiving registration of a second member being a member of a second vehicle lending service for which the usage period of the vehicle for the user is a second period shorter than the first period;
storing registration information that sets the user as the first member based on the step of receiving the registration of the first member and storing registration information that sets the user as the second member based on the step of receiving the registration of the second member; and
executing payment processing for a usage fee for a first vehicle in the first vehicle lending service and executing payment processing for a usage fee for a second vehicle in the second vehicle lending service,
wherein the step of storing includes being allowed to store, based on the step of receiving the registration of the first member, registration information that sets the user as the second member while setting the user as the first member, and
wherein the step of executing the payment processing includes being allowed to execute lump-sum payment processing for collectively paying the usage fee for the first vehicle and the usage fee for the second vehicle.
